Europäisches Patentamt

European Patent Office

Office européen des brevets

(11) Veröffentlichungsnummer: **0 153 681**
A2

# (12) EUROPÄISCHE PATENTANMELDUNG

(21) Anmeldenummer: 85101719.4

(22) Anmeldetag: 15.02.85

(51) Int. Cl.⁴: **B 31 D 3/02**
B 32 B 3/12, B 29 D 24/00

(30) Priorität: 25.02.84 DE 3406952

(43) Veröffentlichungstag der Anmeldung:
04.09.85 Patentblatt 85/36

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Mielke, Manfred
Hirtenau 50
D-6900 Heidelberg(DE)

(72) Erfinder: Wagenknecht, Axel
Friedenstrasse 43
D-6737 Boehl-Iggelheim(DE)

(72) Erfinder: Wittwer, Volker, Dr.
Kammertalstrasse 15
D-7800 Freiburg-Tiengen(DE)

(54) Verfahren zur Herstellung von dreidimensionalen lichtdurchlässigen Wabenstrukturen aus Kunststoffen.

(57) Durch Thermoformen (Warmformen oder Tiefziehen) von Kunststoff-Folien oder -Platten zu rippenförmigen Strukturen mit 3 bis 15 mm Tiefe und von 3 bis 100 mm Breite im Abstand der jeweils gewählten Breite und bezogen auf die Tiefe in 3- bis 30-facher Länge und Aufeinanderstapeln dieser Formteile in äußere Rahmen, Aufrollen oder Verlegen als Endlosband, lassen sich dreidimensionale lichtdurchlässige Wabenstrukturen aus Kunststoffen fertigen. Durch Verkleben, Verschweißen oder Heißsiegeln der rippenförmigen Vertiefungen durch eine Folie oder miteinander erhalten die durch Thermoformen erzeugten Formteile aufgrund der erzeugten Luft- oder Gaspolster zusätzliche mechanische Festigkeit.

Zum Schutz gegen äußere Einflüsse werden die so hergestellten transparenten Wabenstrukturen auf einer oder beiden Außenflächen mit einer transparenten Platte oder Folie abgedeckt, verklebt oder versiegelt. Durch Füllung nur der rippenförmigen Vertiefungen oder der gesamten lichtdurchlässigen Wabenstruktur mit einem Gas mit hohem Molekulargewicht wird die wärmedämmende Eigenschaft der dreidimensionalen lichtdurchlässigen Wabenstruktur gesteigert.

0153681

Verfahren zur Herstellung von dreidimensionalen lichtdurchlässigen Wabenstrukturen aus Kunststoffen

Die vorliegende Erfindung betrifft ein Verfahren zur Herstellung von dreidimensionalen lichtdurchlässigen Wabenstrukturen aus Kunststoffen.

Mit dem Anstieg der Energiekosten hat der Bedarf an Isolierstoffen zur Wärmedämmung zugenommen.

Für verschiedenste Anwendungsgebiete werden auch Isoliermaterialien und Vorrichtungen zur Wärmedämmung benötigt, die lichtdurchlässig sind.

Bei Gewächshäusern, Fabrik-, Lager- und Tennishallen sowie bei Wohnbauten können durch die Verwendung lichtdurchlässiger Wärmedämmungen sowohl das einfallende Tageslicht für den Pflanzenwuchs oder zur Beleuchtung des Arbeits-, Freizeit- oder Wohnraumes genutzt werden, als auch die Wärmeverluste aus diesen Räumen gegenüber einer Einfach- oder Doppel-Verglasung verringert werden. Die einfallende Globalstrahlung kann zusätzlich zur direkten Erwärmung des betreffenden Raumes oder der mit der lichtdurchlässigen Wärmedämmung abgedeckten Gebäude genutzt werden.

Auch für Sonnenkollektoren sind transparente Isolierungen zur Erhöhung von Stillstands- und Arbeitstemperatur nützlich, wie schon in einer Untersuchung von K.N. Marshall, R.K. Wedel und R.E. Damann, "Development of Plastic Honeycomb Flat-Plate Solar Collectors", Final Report ERDA, Div. of Solar Energy, SAN 1081-76/1 (1975), Seiten 17-18, gezeigt wurde.

In diesem Bericht wird ein Herstellungsverfahren der Firma Hexcel, Dublin, Kalifornien, beschrieben, das auf dem Auseinanderziehen und einer Wärmebehandlung von streifenweise miteinander verklebten Folienabschnitten zu Wabenstrukturen beruht.

Die Nachteile dieses Verfahrens bestehen vor allem darin, daß die Kunststoff-Folien vor der Verformung miteinander verklebt werden müssen, d.h. die Materialeigenschaften der durch Verkleben erzeugten Folienstapel und damit die Festigkeit und Gleichmäßigkeit der verklebten und gegeneinander versetzten Klebestreifen bestimmen weitgehend die Qualität der durch Auseinanderziehen des Folienstapels erzeugten Wabenstruktur.

Da das Verkleben von Kunststoff-Folien oder -Platten sehr stark abhängig ist von der Art des Kunststoffes, und viele Kunststoffe, wie Polyolefine oder fluorierte Kunststoffe, eine besondere Oberflächenbehandlung, z.B. eine Koronaentladung oder chemische Vorbehandlung durch Beizlösungen benötigen, bevor sie verklebt werden können, und die Klebeverbindungen selbst vielfach eine geringe Haftfestigkeit besitzen, stellt das bekannte Hexcel-Verfahren in der Auswahl der verwendbaren Materialien und in der mit diesen Materialien erreichbaren Qualität der Wabenstrukturen eine erhebliche technische Beschränkung dar.

Weitere Herstellungsverfahren für Waben werden unter dem Stichwort "expanded core process" in den Patentschriften US 4 334 524, US 3 765 810, US 3 919 379, US 3 919 380, US 3 919 445 und US 3 919 446 beschrieben. Der "expanded core process" beruht auf dem Auseinanderdrücken zweier beheizter Stempel, zwischen denen das thermoplastische Wabenmaterial erhitzt wird. Der Kontakt der Metallflächen zur Polymerschmelze, d.h. die Adhäsionskräfte müssen stärker sein als die Kohäsionskräfte in der Polymerschmelze. Der während des Auseinanderdrückens der beiden Stempel erzeugte Unterdruck in den neu entstehenden Hohlräumen wird über Belüftung durch Kanäle in den Stempelplatten ausgeglichen.

Nachteile bei diesem Verfahren bestehen in der Schwierigkeit der Prozeßführung. Einerseits ist eine hohe und gleichmäßige Adhäsion zu den auf den Stempeln dafür vorgesehenen Flächen notwendig, und andererseits ist eine schnelle und hohe Dehnung der Polymerschmelze herbeizuführen, ohne daß die entstehenden Zellwände einfallen, reißen oder sich aufgrund mangelnder Adhäsion von Stempel ablösen. Bei kristallinen Polymeren ist eine sehr engbegrenzte und genaue Temperaturführung von wenigen K Temperaturdifferenz erforderlich, um überhaupt kristalline Polymere nach diesem Prozeß verformen zu können.

Ein weiteres Herstellungsverfahren für dreidimensionale lichtdurchlässige Wabenstrukturen wurde von der Fa. Diveno Kapillartechnik GmbH, Donaueschingen, entwickelt ("PC capillaries open up markets in insulation, solar collectors", Modern Plastics International, 12 (Juli 1982), S. 8 und 9).

Das Diveno-Verfahren beruht auf der Vielfach-Extrusion von Kapillaren oder Röhrchen von 0,5 bis 2 mm Durchmesser durch eine Düse mit parallel angeordneten Öffnungen, Aufwickeln auf eine Trommel und Schneiden mit einem heißen Messer. Durch das Schneiden unter hoher Temperatur senkrecht zu den Röhrchenachsen werden die Kapillarenden untereinander verklebt.

Die Diveno-Kapillarplatten bestehen aus einer Vielzahl miteinander verklebter Röhrchen. Bedingt durch das Herstellungsverfahren werden Rohdichten von 30 bis 70 kg/cm$^3$ für Kapillarplatten aus Polycarbonat erhalten.

BASF Aktiengesellschaft  - 3 -  O.Z. 0050/36987
0153681

Nachteile bei diesen Kapillarplatten bestehen in der Kleinheit der Kapillardurchmesser und der Eigenschaft, daß die Röhrchen Wand an Wand liegen und dadurch ein hoher Materialverbrauch bei der Herstellung benötigt wird.

Die nach dem Diveno-Verfahren gefertigten Kapillar-Platten haben bei offener oder loser Verlegung unter einer transparenten Abdeckung den Nachteil, daß die Kapillaren dazu neigen, aufgrund von Kapillarkräften verstärkt Wasser (Kondenswasser) aufzunehmen und dieses nur schwer wieder abzugeben. Feuchtigkeit in den Kapillaröffnungen der lichtdurchlässigen Wärmedämmplatten verschlechtert aber nicht nur die wärmedämmenden Eigenschaften, sondern kann bei tröpfchenförmiger Ablagerung auch die Lichtdurchlässigkeit der Wabenstruktur vermindern.

Technische Probleme bei der Fertigung von lichtdurchlässigen Wabenstrukturen mit Wärmedämmeigenschaften gleichbleibender Qualität, Einschränkungen in der Art der zu verwendenden Kunststoffe und Verbindungstechniken für diese Kunststoffe sowie hoher Materialeinsatz haben bisher zu solchen Produkten geführt, die jeweils nur in begrenztem Umfang verwendbar sind.

Aufgabe der vorliegenden Erfindung war es daher, ein Verfahren zur Herstellung von lichtdurchlässigen und wärmeisolierenden Wabenstrukturen zu entwickeln, das für die Verarbeitung sämtlicher thermoformbarer Kunststoffe (Thermoplaste) und deren Verbund untereinander geeignet ist, das mit geringerem Materialbedarf pro Kubikmeter Wabenstruktur auskommt und den Aufbau von insgesamt mechanisch stabilen lichtdurchlässigen und wärmedämmenden Wabenstrukturen ermöglicht.

Diese Aufgabe wird erfindungsgemäß dadurch gelöst, daß

a)   Kunststoff-Folien oder -Platten durch Thermoformen (Warmformen oder Tiefziehen) rippenförmige Strukturen von 3 bis 15 mm Tiefe und von 3 bis 100 mm Breite im Abstand der jeweils gewählten Breite und bezogen auf die Tiefe in 3- bis 30facher Länge erhalten und

b)   die so hergestellten Formteile in einem äußeren Rahmen aufeinander gestapelt oder als Endlosband aufgerollt bzw. verlegt werden.

Die rippenartigen Vertiefungen der Formteile sind erfindungsgemäß so ausgebildet, daß durch Stapelung dieser Formteile direkt aufeinander oder durch Drehung des jeweils zweiten Formteils, in dem die Oberseite mit der Unterseite vertauscht wird, und Stapelung aufeinander, dreidimensionale lichtdurchlässige Wabenstrukturen aufgebaut werden können.

Die erfindungsgemäßén Wabenstrukturen können aber auch durch Hin- und Herverlegen eines rippenförmig ausgeformten Endlosbandes in einer Rahmenkonstruktion oder durch Aufwickeln auf eine zylindrische Welle erzeugt werden. Die Rahmenkonstruktion, ähnlich einem Fensterrahmen und vergleichbaren äußeren Abmessungen, kann z.B. aus U-förmigen Profilen bestehen, in die die Formteile bündig eingelegt werden und so der verlegten Wabenstruktur nach außen und im Inneren mechanische Stabilität verleihen.

Durch eine mit Stiften senkrecht zur Bodenplatte versehene Vorrichtung können die tiefgezogenen Formteile erfindungsgemäß zusätzlich an zwei oder mehr Stellen fixiert werden, indem diese Stifte bereits dafür vorgeformte Vertiefungen bündig durchstoßen und so ein gegenseitiges Verschieben der Formteile beim Aufeinanderstapeln verhindern.

Die rippenartigen Vertiefungen der Formteile können erfindungsgemäß so ausgeformt werden, daß jede Rippe eine stufenförmige Vertiefung besitzt, die es ermöglicht, die Formteile so aufeinander zu stapeln, daß sie wenige Millimeter tief ineinander stecken (1 bis 5 mm) und so in ihrer Lage zueinander fixiert sind.

Die rippenartigen Vertiefungen der Formteile können erfindungsgemäß auch so ausgeformt sein, daß einzelne Rippen bis auf maximal den doppelten Wert tiefer gezogen sind als die übrigen (z.B. jede 5. oder 10. Rippe) und mittels dieser besonders tief gezogenen Rippen im darunter liegenden Formteil befestigt sind. Werden die rippenartigen Vertiefungen erfindungsgemäß so ausgeformt, daß sie mit zunehmender Tiefe etwas breiter werden (1 bis 5 mm), so kann der Aufbau der dreidimensionalen lichtdurchlässigen Wabenstruktur vorteilhaft auch so erfolgen, daß das jeweils nächste Formteil mit seinen rippenförmigen Vertiefungen auf den jeweils unteren aufliegt und einzelne tiefer gezogene Rippen in die jeweils unteren so eingedrückt werden, daß eine mechanische Verankerung der Formteile untereinander erfolgt. Eine so aufgebaute dreidimensionale lichtdurchlässige Wabenstruktur kann weder in Richtung der Ebene der Formteile noch senkrecht dazu auseinanderfallen, d.h. sie besitzt in alle Richtungen eine Eigenstabilität.

Selbstverständlich ist es auch möglich, die Folien oder Platten direkt nach Extrusion und Kalandrierung über die sogenannte "Inline-Technik" ohne vorhergehende Abkühlung über eine Walze oder durch ein Walzenpaar mit der erforderlichen Kontur bzw. rippenförmigen Oberflächenstruktur warmzuformen, wobei zunächst entsprechend der jeweils verwendeten Walzenbreite die Länge der rippenförmigen Folienstruktur größer sein kann als im Hauptanspruch gefordert.

Die so hergestellten Formteile werden erfindungsgemäß nach ihrer Stapelung in einem äußeren Rahmen oder in aufgerollter Form durch Schneiden mit einem heißen Draht oder Messer senkrecht zu den rippenförmigen Strukturen auf die im Hauptanspruch geforderte Länge verkürzt, mit dem zusätzlichen verfahrenstechnischen Vorteil, daß das Heißschneiden bei vielen Kunststoffen zu einem wechselseitigen Verschweißen an den Schnittkanten führt.

Die Vorteile des erfindungsgemäßen Verfahrens bestehen erstens darin, daß sämtliche durch Thermoformen verformbaren Kunststoffe (Thermoplaste) Verwendung finden können, zweitens, daß ein Warmformen der Folien oder Platten zu rippenförmigen Formteilen erfolgt, bevor eine Verbindung zwischen den Formteilen untereinander hergestellt wird, und drittens die Verbindung der Formteile untereinander auch mechanisch durch Stapelung in einer Rahmenkonstruktion mit einem teilweisen Ineinanderstecken ohne Kleben möglich ist.

Geeignet für das erfindungsgemäße Herstellverfahren sind alle warmformbaren bzw. tiefziehfähigen Kunststoffe, wobei eine hohe Durchlässigkeit für die direkte und besonders die diffuse Solarstrahlung erwünscht ist. Die folgenden transparenten Kunststoffe können nach dem erfindungsgemäßen Herstellungsverfahren verwendet werden:

Polyethylen (PE), Polypropylen (PP), Polystyrol (PS), Polyvinylchlorid (PVC), Polyamid (PA), Polycarbonat (PC), Styrol-Butadien-Copolymere (SB), Styrol-Butadien-Blockcopolymere, Polymethylmethacrylat (PMMA), Styrol-Acrylnitril-Copolymere (SAN), Acrylnitril-Butadien-Styrol-Copolymere (ABS), Polyoxymethylen (POM), Polyethylenterephthalat (PETP), Polybutylenterephthalat (PBTP), Polyester, Polyvinylfluorid (PVF), Polyethersulfon (PES), Polytetrafluorethylen (PTFE), Mischpolymerisate aus Polytetrafluorethylen (PTFE) und Polyethylen (PE) sowie Verbundhalbzeuge und Mischungen (Blends) aus den genannten Polymeren.

Da die Verformung der Folien oder Platten zu rippenförmigen Formteilen durch Warmformen erfolgt, bevor eine Verbindung zwischen diesen Formteilen in einer Rahmenkonstruktion durch Stapelung erfolgt, haben Verbindungstechniken, die über die beschriebenen mechanischen hinausgehen, d.h. Verfahren wie Kleben, Schweißen oder Heißsiegeln keinen nachteiligen Einfluß auf die eigentliche geometrische Struktur der Wabe. Verbindungen, die zwischen den Formteilen durch Kleben, Schweißen oder Heißsiegeln hergestellt werden, sind für die Qualität und Gleichmäßigkeit der Wabenstruktur nicht allein entscheidend.

Gemäß einer weiteren Ausbildung der Erfindung werden die rippenförmigen Vertiefungen der Formteile bzw. des Endlosbandes mit einer Folie verklebt, verschweißt oder heißgesiegelt.

Da eine Versiegelung der rippenförmigen Vertiefungen der Formteile unmittelbar nach dem Thermoformen oder Tiefziehen erfolgen kann, ergibt sich die Möglichkeit, auch sehr dünne Folien mit Wandstärken von weniger als 200 µm zu verformen und zu versiegeln, weil die tiefgezogenen rippenförmigen Vertiefungen noch durch die Wände der Tiefziehform mechanisch gestützt werden, bevor das Formteil von Seiten der Tiefziehform durch Kanäle belüftet und damit entformt wird. Durch das Verschließen der rippenförmigen Vertiefungen mit einer Folie durch Schweißen oder durch Kleben mit Schmelzkleber oder durch Heißsiegeln mit einer Heißsiegelfolie erhalten die Formteile in Richtung der rippenförmigen Vertiefungen eine zusätzliche mechanische Festigkeit, die durch die eingeschlossene Luft bewirkt wird.

Diese rippenförmigen Luftpolster sind besonders bei Formteilen, die aus sehr dünnen oder weich eingestellten Folien geformt sind und aufgrund ihres Eigengewichts zum Durchbiegen neigen von Vorteil, da sie den Aufbau von stabilen, dreidimensionalen und lichtdurchlässigen Wabenstrukturen erleichtern.

Gemäß einer weiteren vorteilhaften Ausbildung der Erfindung können die rippenförmig strukturierten Formteile bzw. Endlosbänder auch direkt miteinander verklebt, verschweißt oder heißgesiegelt werden.

Ein Vorteil dieser Verfahrensführung liegt darin, daß ebenfalls sehr dünne Folien mit Wandstärken unter 200 µm verformt und miteinander verschweißt werden können, da die tiefgezogenen rippenförmigen Vertiefungen noch durch die Wände der Tiefziehform mechanisch gestützt werden, bevor die Formteile von Seiten der Tiefziehform durch Kanäle belüftet und damit entformt werden. Die auf diese Weise erzeugten rippenförmigen Hohlräume sind ebenfalls mit Luft gefüllt. Nach diesem Verfahren lassen sich aus sehr dünnen Folien mit Wandstärken unter 200 µm Wabenstrukturen erzeugen, die geometrisch gleichmäßig aufgebaut sind mit dem Vorteil geringen Materialbedarfs und geringer Rohdichte von weniger als 30 kg/m$^3$ bei ausreichender mechanischer Stabilität und Eigenfestigkeit.

Man kann auch eine der beiden Außenflächen der dreidimensionalen lichtdurchlässigen Wabenstrukturen mit einer transparenten Platte oder Folie abdecken, verkleben oder versiegeln.

Damit erreicht man, daß die eigentliche Wabenstruktur gegen äußere Einflüsse wie Staub, Feuchtigkeit, Feuer, Pilzbefall, UV-Strahlung, Wind, Hagelschlag oder andere mechanische Einwirkungen geschützt wird.

Durch Einlegen der erfindungsgemäß hergestellten Formteile in eine Rahmenkonstruktion, über die beidseitig eine transparente Folie gespannt ist oder die von transparenten Platten begrenzt ist, läßt sich somit ohne Kleben eine wärmedämmende lichtdurchlässige Wabenstruktur aufbauen.

Durch Verkleben oder Versiegeln mit einer transparenten Platte oder Folie auf einer oder beiden Außenflächen der Wabenstruktur ergibt sich als weiterer Vorteil, damit die mechanische Stabilität der Wabenstruktur im Inneren zu verbessern, ohne daß die Lichtdurchlässigkeit der wärmedämmenden Schicht wesentlich abnimmt.

Eine weitere vorteilhafte Ausbildung der Erfindung besteht darin, die Wabenstrukturen ganz oder teilweise mit einem Gas oder Gasgemisch hohem Molekulargewichts zu füllen.

Durch teilweise Füllung der rippenförmigen Vertiefungen mit einem Gas oder Gasgemisch hohen Molekulargewichts (z.B. fluorierte Kohlenwasserstoffe) oder durch vollständige Füllung mit einem Gas oder Gasgemisch hohen Molekulargewichts sämtlicher Hohlräume der Wabenstruktur wird die Wärmeleitung der Wabenstruktur aufgrund der geringeren Wärmeleitung des Füllgases im Vergleich zu Luft verringert und damit die wärmedämmenden Eigenschaften der gesamten lichtdurchlässigen Wabenstruktur verbessert.

Zusätzlich kann das Füllgas die vorteilhafte Eigenschaft besitzen, die Brennbarkeit der Wabenstruktur herabzusetzen.

Patentansprüche

1. Verfahren zur Herstellung von dreidimensionalen lichtdurchlässigen Wabenstrukturen aus Kunststoffen, dadurch gekennzeichnet, daß

   a) Kunststoff-Folien oder -Platten durch Thermoformen (Warmformen oder Tiefziehen) rippenförmige Strukturen von 3 bis 15 mm Tiefe und von 3 bis 100 mm Breite im Abstand der jeweils gewählten Breite und bezogen auf die Tiefe in 3- bis 30-facher Länge erhalten und

   b) die so hergestellten Formteile in einem der Länge der rippenförmigen Struktur angepaßten äußeren Rahmen aufeinander gestapelt oder als Endlosband aufgerollt bzw. verlegt werden.

2. Verfahren nach Anspruch 1, dadurch gekennzeichnet, daß die rippenförmigen Strukturen der Formteile bzw. des Endlosbandes mit einer Folie verklebt, verschweißt oder heißgesiegelt werden.

3. Verfahren nach Anspruch 1, dadurch gekennzeichnet, daß die rippenförmige Strukturen der Formteile bzw. des Endlosbandes direkt miteinander verklebt, verschweißt oder heißgesiegelt werden.

4. Verfahren nach Anspruch 1 bis 3, dadurch gekennzeichnet, daß eine oder beide Außenflächen der lichtdurchlässigen Wabenstrukturen mit einer Platte oder Folie abgedeckt, verklebt oder versiegelt werden.

5. Verfahren nach Anspruch 1 bis 4, dadurch gekennzeichnet, daß die Wabenstrukturen ganz oder teilweise mit einem Gas oder einer Gasmischung von höherem Molekulargewicht als Luft, z.B. fluorierten Kohlenwasserstoffen, gefüllt werden.